# EUROPÄISCHE PATENTSCHRIFT

(11) **EP 4 042 833 B1**
(45) Veröffentlichungstag und Bekanntmachung des Hinweises auf die Patenterteilung: **06.08.2025**
(21) Anmeldenummer: 20772335.4
(22) Anmeldetag: 23.09.2020
(51) Int. Cl.: H05B 6/06, H05B 6/12

(54) **INDUKTIONSENERGIEÜBERTRAGUNGSSYSTEM**
INDUCTION POWER TRANSMISSION SYSTEM
SYSTÈME DE TRANSMISSION DE PUISANCE PAR INDUCTION

(30) Priorität: 08.10.2019 EP 19382877
(43) Veröffentlichungstag der Anmeldung: 17.08.2022
(73) Patentinhaber: BSH Hausgeräte GmbH, 81739 München (DE)
(72) Erfinder: CABEZA GOZALO, Tomas, 50010 Zaragoza (ES); LASOBRAS BERNAD, Javier, 50016 EJEA DE LOS CABALLEROS (ZARAGOZA) (ES); LLORENTE GIL, Sergio, 50009 Zaragoza (ES); PLUMED VELILLA, Emilio, 50007 Zaragoza (ES); RIVERA PEMAN, Julio, 50410 Cuarte de Huerva (Zaragoza) (ES)
(86) Internationale Anmeldenummer: PCT/EP2020/076522
(87) Internationale Veröffentlichungsnummer: WO 2021/069213

(56) Entgegenhaltungen:
- EP-A1- 2 798 909
- EP-A1- 2 849 627
- EP-A1- 2 878 169
- EP-B1- 2 798 909
- EP-B1- 2 849 627
- EP-B1- 2 878 169
- DE-A1- 102008 054 906
- JP-A- S62 166 783
- US-A1- 2009 095 736

## Beschreibung

Die Erfindung betrifft ein Induktionsenergieübertragungssystem, insbesondere ein Induktionsgarsystem, nach dem Oberbegriff des Anspruchs 1 und ein Verfahren zu einem Betrieb eines Induktionsenergieübertragungssystems, insbesondere eines Induktionsgarsystems, nach dem Oberbegriff des Anspruchs 11.

Aus dem Stand der Technik ist bereits ein Induktionsenergieübertragungssystem bekannt, welches eine als Kochfeld ausgebildete Versorgungseinheit mit mehreren Versorgungsinduktionselementen aufweist, die in einem Betriebszustand Energie an eine Aufnahmeeinheit bereitstellen, welche als ein Gargeschirr ausgebildet ist. Die Aufnahmeeinheit ist Teil des Induktionsenergieübertragungssystems und weist mehrere Aufnahmeinduktionselemente auf. Die Aufnahmeinduktionselemente empfangen in dem Betriebszustand Energie von den Versorgungsinduktionselementen und versorgen mit einem Teil der von den Versorgungsinduktionselementen aufgenommenen Energie eine weitere Einheit der Aufnahmeeinheit.

EP 2 798 909 A1 offenbart ein Induktionsenergieübertragungssystem laut des Oberbegriffes des Anspruchs 1.

Die Aufgabe der Erfindung besteht insbesondere darin, ein gattungsgemäßes System mit verbesserten Eigenschaften hinsichtlich einer Energieversorgung bereitzustellen. Die Aufgabe wird durch die Merkmale der Ansprüche 1 und 11 gelöst, während vorteilhafte Ausgestaltungen und Weiterbildungen der Erfindung den Unteransprüchen entnommen werden können.

Die Erfindung geht aus von einem Induktionsenergieübertragungssystem, insbesondere einem Induktionsgarsystem und vorteilhaft einem Induktionskochsystem, mit zumindest einer Aufnahmeeinheit, welche zumindest ein Aufnahmeinduktionselement aufweist, welches zu einem Empfang einer induktiv bereitgestellten Energie vorgesehen ist.

Erfindungsgemäß weist die Aufnahmeeinheit zumindest eine mit dem Aufnahmeinduktionselement verbundene Spannungswandlereinheit auf, die zu einer Wandlung einer elektrischen Spannung des Aufnahmeinduktionselements für eine Energieversorgung zumindest einer weiteren Einheit vorgesehen ist.

Durch die erfindungsgemäße Ausgestaltung kann vorteilhaft eine optimierte Energieversorgung, insbesondere der weiteren Einheit erreicht werden. Insbesondere kann ein hoher Bedienkomfort erreicht werden, und zwar insbesondere in Bezug auf eine hohe Funktionstüchtigkeit und/oder eine optimierte Energieversorgung der weiteren Einheit. Eine zu der Energieversorgung der weiteren Einheit herangezogene und/oder bereitgestellte Spannung kann durch die Spannungswandlereinheit gewandelt und insbesondere erhöht werden, wodurch die weitere Einheit insbesondere in einem optimierten und/oder für die weitere Einheit zugeschnittenen Spannungsbereich betrieben werden kann. Eine Überlastung insbesondere des Aufnahmeinduktionselements und/oder zumindest eines Spannungsreglers der Aufnahmeeinheit kann insbesondere vermieden werden, wodurch insbesondere eine funktionstüchtige und/oder langlebige Ausgestaltung erzielt werden kann. Insbesondere kann eine geringe Wahrscheinlichkeit eines Defekts der weiteren Einheit ermöglicht werden. Es kann insbesondere eine hohe Effizienz ermöglicht werden. Insbesondere können geringe elektrische Verluste erzielt werden.

Unter einem "Induktionsenergieübertragungssystem", insbesondere unter einem "Induktionsgarsystem" und vorteilhaft unter einem "Induktionskochsystem", soll insbesondere ein System verstanden werden, welches eine Hauptfunktion in Form einer Energieübertragung und/oder eines Energieempfangs aufweist. Dabei könnte das Induktionsenergieübertragungssystem als ein Gargeschirr oder eine Unterlegeinheit zur Aufstellung eines Gargeschirrs ausgebildet sein. Das Induktionsenergieübertragungssystem kann jedoch neben der Aufnahmeeinheit auch zusätzlich zumindest eine Versorgungseinheit, insbesondere zumindest ein Induktionsgargerät und vorteilhaft zumindest ein Induktionskochfeld, aufweisen. Die Versorgungseinheit weist insbesondere zumindest ein Versorgungsinduktionselement auf, welches insbesondere in wenigstens einem Betriebszustand Energie, insbesondere zum Zweck einer Energieübertragung, an die Aufnahmeeinheit bereitstellt. Beispielsweise könnte das Induktionsenergieübertragungssystem als ein Induktionshandwerkzeugmaschinensystem ausgebildet sein. Insbesondere könnte die Versorgungseinheit und/oder die Aufnahmeeinheit als eine Handwerkzeugmaschine, wie beispielsweise ein Bohrer und/oder ein Elektroschrauber und/oder ein Bohrhammer und/oder eine Säge, ausgebildet sein. Alternativ oder zusätzlich könnte die Versorgungseinheit und/oder die Aufnahmeeinheit als ein Transformator ausgebildet sein. Das Induktionsenergieübertragungssystem könnte insbesondere für zumindest ein selbstfahrendes Arbeitsgerät und/oder für zumindest eine Fernsteuerung und/oder für zumindest eine Fernbedienung vorgesehen sein. Insbesondere könnte die Aufnahmeeinheit als ein selbstfahrendes Arbeitsgerät und/oder als eine Fernsteuerung und/oder als eine Fernbedienung ausgebildet sein. Das selbstfahrende Arbeitsgerät könnte beispielsweise als ein selbstfahrender Rasenmäher und/oder als ein selbstfahrender Staubsauger ausgebildet sein. Die Fernsteuerung und/oder die Fernbedienung könnte insbesondere zu einer Bedienung und/oder zu einer Steuerung zumindest einer Jalousie und/oder zumindest eines Elektrogeräts, insbesondere zumindest eines Haushaltselektrogeräts, und/oder zumindest eines Modellobjekts, wie beispielsweise eines Modellautos und/oder eines Modellflugzeugs und/oder eines Modellboots, vorgesehen sein. Ferner könnte die Aufnahmeeinheit des Induktionsenergieübertragungssystems als ein Fortbewegungsmittel insbesondere als ein Elektrokraftfahrzeug oder ein Hybridkraftfahrzeug oder als ein Elektrofahrrad oder als ein Elektroroller oder als ein anderes voll- oder teilelektrisch betriebenes Fortbewegungsmittel ausgebildet sein. Vorzugsweise ist das Induktionsenergieübertragungssystem als ein Induktionsgarsystem ausgebildet. Beispielsweise könnte das Induktionsenergieübertragungssystem als ein Induktionsbackofensystem und/oder als ein Induktionsgrillsystem ausgebildet sein. Insbesondere könnte die Versorgungseinheit und/oder die Aufnahmeeinheit als ein Induktionsbackofen und/oder als ein Induktionsgrill ausgebildet sein. Vorteilhaft ist das Induktionsenergieübertragungssystem als ein Induktionskochsystem ausgebildet. Die Versorgungseinheit und/oder die Aufnahmeeinheit ist insbesondere als ein Induktionskochfeld ausgebildet.

Unter einer "Aufnahmeeinheit" soll insbesondere eine Einheit verstanden werden, welche in wenigstens einem Betriebszustand, insbesondere induktiv, Energie empfängt und welche insbesondere zumindest eine Hauptfunktion aufweist. Die Aufnahmeeinheit könnte beispielsweise zumindest einen Verbraucher aufweisen, welcher insbesondere Teil der weiteren Einheit sein könnte und welcher in dem Betriebszustand insbesondere Energie verbrauchen könnte. Alternativ oder zusätzlich könnte die Aufnahmeeinheit zu einer Energieversorgung der weiteren Einheit vorgesehen sein und insbesondere selbst frei von einem Verbraucher sein. Die Aufnahmeeinheit könnte beispielsweise eine Handwerkzeugmaschine, wie beispielsweise ein Bohrer und/oder ein Elektroschrauber und/oder ein Bohrhammer und/oder eine Säge, und/oder ein Auto und/oder ein mobiles Gerät, wie beispielsweise ein Laptop und/oder ein Tablet und/oder ein Mobiltelefon, und/oder eine Fernsteuerung und/oder eine Fernbedienung und/oder ein selbstfahrendes Arbeitsgerät sein. Ferner könnte die Aufnahmeeinheit als ein Fortbewegungsmittel insbesondere als ein Elektrokraftfahrzeug oder ein Hybridkraftfahrzeug oder als ein Elektrofahrrad oder als ein Elektroroller oder als ein anderes voll- oder teilelektrisch betriebenes Fortbewegungsmittel ausgebildet sein. Eine Hauptfunktion der Aufnahmeeinheit könnte beispielsweise ein Bohren und/oder ein Hämmern und/oder ein Sägen und/oder ein Schrauben und/oder eine Datenverarbeitung und/oder ein Telefonieren und oder/oder ein Fahren beinhalten.

Im Falle eines als Induktionsgarsystem ausgebildeten Induktionsenergieübertragungssystems ist eine Hauptfunktion der Aufnahmeeinheit insbesondere eine Energieaufnahme. In diesem Fall kann die Aufnahmeeinheit als eine Aufstelleinheit und insbesondere als ein Gargeschirr und/oder als eine Unterlegeinheit zur Aufstellung eines Gargeschirrs ausgebildet sein. Unter einer "Aufstelleinheit" soll insbesondere eine Einheit verstanden werden, welche zu einer Kopplung mit der Versorgungseinheit, insbesondere mit dem Versorgungsinduktionselement, vorgesehen ist und welche insbesondere im Zuge der Kopplung mit der Versorgungseinheit in wenigstens einem Betriebszustand Energie von der Versorgungseinheit empfängt und/oder aufnimmt. Die Aufstelleinheit könnte beispielsweise zumindest ein Gargeschirr aufweisen. Alternativ oder zusätzlich könnte die Aufstelleinheit zumindest eine Unterlegeinheit aufweisen, welche insbesondere zu einem Aufstellen zumindest eines Gargeschirrs, insbesondere des Gargeschirrs, vorgesehen sein könnte. Die Unterlegeinheit könnte insbesondere zu einer Anordnung zwischen der Aufstellplatte und dem Gargeschirr vorgesehen sein. Alternativ oder zusätzlich könnte die Aufstelleinheit zumindest eine Gehäuseeinheit aufweisen, welche insbesondere als eine Außengehäuseeinheit ausgebildet sein könnte und insbesondere ein Außengehäuse definieren könnte. Insbesondere könnte zumindest ein Objekt der Aufstelleinheit, insbesondere zumindest die Aufnahmeinduktionselemente und/oder die weitere Einheit und/oder das weitere Aufnahmeinduktionselement und/oder die Steuereinheit, wenigstens teilweise und vorteilhaft wenigstens zu einem Großteil in der Gehäuseeinheit integriert sein. Insbesondere könnte zumindest eines der Aufnahmeinduktionselemente in dem Betriebszustand eine den Aufnahmeraum wenigstens abschnittsweise begrenzende Wandung mittels zumindest eines Teils der von dem Versorgungsinduktionselement aufgenommenen Energie beheizen. Alternativ oder zusätzlich könnte das Versorgungsinduktionselement insbesondere mittels der von dem Versorgungsinduktionselement bereitgestellten Energie in dem Betriebszustand eine den Aufnahmeraum wenigstens abschnittsweise begrenzende Wandung direkt beheizen. Unter einem "Aufnahmeraum" soll insbesondere ein räumlicher Bereich verstanden werden, welcher in dem Betriebszustand, in welchem die Versorgungseinheit insbesondere Energie an die Aufnahmeeinheit überträgt, wenigstens zu einem Großteil von der Aufnahmeeinheit begrenzt ist und in welchem in dem Betriebszustand insbesondere Lebensmittel angeordnet sein können. Die Lebensmittel könnten insbesondere in fluider, insbesondere flüssiger und/oder wenigstens zu einem Großteil flüssiger, und/oder fester Form in dem Aufnahmeraum angeordnet sein. Dadurch können Lebensmittel insbesondere besonders effizient und/oder gezielt gegart werden, da insbesondere eine zu einer Garung erforderliche Energie präzise übertragen werden kann.

Beispielsweise könnte die von der Aufnahmeeinheit aufgenommene Energie in dem Betriebszustand insbesondere direkt in zumindest eine weitere Energieform umgewandelt werden, wie beispielsweise in Wärme. Die Aufnahmeeinheit könnte beispielsweise zumindest zwei, insbesondere zumindest drei, vorteilhaft zumindest vier, besonders vorteilhaft zumindest fünf, vorzugsweise zumindest acht und besonders bevorzugt mehrere Aufnahmeinduktionselemente aufweisen, welche insbesondere in dem Betriebszustand jeweils induktiv Energie insbesondere von dem Versorgungsinduktionselement empfangen könnten.

Unter einer "Versorgungseinheit" soll insbesondere eine Einheit verstanden werden, welche in wenigstens einem Betriebszustand induktiv Energie bereitstellt und welche insbesondere eine Hauptfunktion in Form einer Energiebereitstellung aufweist. Zu der Bereitstellung von Energie weist die Versorgungseinheit insbesondere zumindest ein Versorgungsinduktionselement auf, welches insbesondere zumindest eine Spule, insbesondere zumindest eine Primärspule, aufweist und welches insbesondere in dem Betriebszustand induktiv Energie bereitstellt.

Unter einem "Induktionselement" soll insbesondere ein Element verstanden werden, welches in wenigstens einem Betriebszustand Energie insbesondere zum Zweck einer induktiven Energieübertragung bereitstellt und/oder aufnimmt. Insbesondere stellt in dem Betriebszustand ein als Versorgungsinduktionselement ausgebildetes Induktionselement Energie insbesondere zum Zweck einer induktiven Energieübertragung bereit. Das Versorgungsinduktionselement könnte insbesondere zumindest eine Spule, insbesondere zumindest eine Primärspule, aufweisen, welche insbesondere zu einer induktiven Energieübertragung an zumindest eine Sekundärspule vorgesehen sein könnte. Die Sekundärspule könnte beispielsweise Teil der Aufnahmeeinheit sein, insbesondere zumindest eines Aufnahmeinduktionselements der Aufnahmeeinheit. Insbesondere nimmt in dem Betriebszustand ein als Aufnahmeinduktionselement ausgebildetes Induktionselement Energie insbesondere zum Zweck einer induktiven Energieübertragung auf, und zwar insbesondere von dem Versorgungsinduktionselement. Zumindest eines der Aufnahmeinduktionselemente könnte insbesondere zumindest eine Spule, insbesondere zumindest eine Sekundärspule, aufweisen, welche insbesondere zu einer induktiven Energieaufnahme von dem Versorgungsinduktionselement vorgesehen sein könnte.

Das Versorgungsinduktionselement könnte beispielsweise als ein Transformatorelement, das heißt insbesondere als ein Teil eines Transformators, ausgebildet sein. Alternativ oder zusätzlich könnte das Versorgungsinduktionselement insbesondere als ein Induktionsheizelement ausgebildet sein und insbesondere zu einer Energieübertragung an zumindest eine als Aufstelleinheit ausgebildete Aufnahmeeinheit insbesondere zum Zweck einer Erhitzung zumindest eines Teils der Aufstelleinheit vorgesehen sein. Das Versorgungsinduktionselement könnte in wenigstens einem Betriebszustand insbesondere ein Wechselfeld, insbesondere ein elektromagnetisches Wechselfeld, mit einer Frequenz von mindestens 1 Hz, insbesondere von mindestens 2 Hz, vorteilhaft von mindestens 5 Hz und vorzugsweise von mindestens 10 Hz bereitstellen. Insbesondere könnte das Versorgungsinduktionselement in wenigstens einem Betriebszustand insbesondere ein Wechselfeld, insbesondere ein elektromagnetisches Wechselfeld, mit einer Frequenz von maximal 150 kHz, insbesondere von maximal 120 kHz, vorteilhaft von maximal 100 kHz und vorzugsweise von maximal 80 kHz bereitstellen. Ein insbesondere als Induktionsheizelement ausgebildetes Versorgungsinduktionselement könnte in wenigstens einem Betriebszustand insbesondere ein hochfrequentes Wechselfeld, insbesondere ein hochfrequentes elektromagnetisches Wechselfeld, mit einer Frequenz von mindestens 15 kHz und insbesondere von maximal 100 kHz bereitstellen.

Beispielsweise könnte die Versorgungseinheit genau ein Versorgungsinduktionselement aufweisen. Die Versorgungseinheit könnte beispielsweise zumindest zwei, insbesondere zumindest drei, vorteilhaft zumindest vier, besonders vorteilhaft zumindest fünf, vorzugsweise zumindest acht und besonders bevorzugt mehrere Versorgungsinduktionselemente aufweisen, welche insbesondere in dem Betriebszustand jeweils induktiv Energie bereitstellen könnten, und zwar insbesondere an eine insbesondere einzige Aufnahmeeinheit oder an zumindest zwei Aufnahmeeinheiten. Insbesondere könnte ein insbesondere beliebiges der Versorgungsinduktionselemente in einem Nahbereich zu zumindest einem weiteren der Versorgungsinduktionselemente angeordnet sein. Zumindest ein Teil der Versorgungsinduktionselemente könnte beispielsweise in einer Reihe und/oder in Form einer Matrix angeordnet sein. Insbesondere könnte zumindest ein Teil der Versorgungsinduktionselemente, insbesondere bei einer senkrechten Betrachtung auf eine Haupterstreckungsebene zumindest eines der überlappend angeordneten Versorgungsinduktionselemente, wenigstens teilweise überlappend angeordnet sein.

Unter einer "Spannungswandlereinheit" soll insbesondere eine elektronische Baugruppe verstanden werden, welche zu einer Wandlung zumindest einer Eingangsspannung, insbesondere zumindest einer ersten Effektivspannung, in zumindest eine von der Eingangsspannung betragsmäßig verschiedene Ausgangsspannung, insbesondere zumindest eine zweite Effektivspannung, vorgesehen ist, welche vorzugsweise betragsmäßig höher ist als die Eingangsspannung. Die Spannungswandlereinheit weist vorzugsweise zumindest ein aktives elektrisches und/oder elektronisches Bauelement, wie beispielsweise eine Diode, und zumindest ein passives elektrisches und/oder elektronisches Bauteil, wie beispielsweise einen Kondensator, auf. Vorzugsweise handelt es sich bei der Eingangsspannung um eine in zumindest einem Aufnahmeinduktionselement induzierte elektrische Wechselspannung. In diesem Fall kann eine weitere Hauptfunktion der Spannungswandlereinheit eine Gleichrichtung der Eingangswechselspannung in zumindest eine pulsierende und vorzugsweise in eine geglättete elektrische Ausgangsgleichspannung einer ersten elektrischen Polarität sein. Alternativ ist denkbar, dass es sich bei der elektrischen Eingangsspannung um eine elektrische Gleichspannung handelt. In diesem Fall kann die Aufnahmeeinheit zumindest eine Gleichrichtereinheit umfassen, welche eine in dem zumindest einen Aufnahmeinduktionselement induzierte elektrische Wechselspannung in eine für die Spannungswandlereinheit als Eingangsspannung geeignete elektrische Gleichspannung wandelt.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Die Spannungswandlereinheit umfasst zumindest eine "Spannungskaskade" mit zumindest einer Stufe, in welcher zumindest ein Teil der elektrischen Bauteile der Spannungswandlereinheit angeordnet ist, wodurch vorteilhaft eine elektrische Spannung mit einfachen technischen Mitteln, insbesondere mit einfachen und preisgünstigen elektrischen Bauteilen, gewandelt und insbesondere in ihrem Betrag erhöht und/oder gleichgerichtet werden kann. Ein weiterer Vorteil einer Spannungswandlereinheit mit zumindest einer Spannungskaskade ergibt sich daraus, dass in einer solchen Ausgestaltung auf induktive elektrische und/oder induktive elektronische Bauteile, wie insbesondere auf Spulen in der Spannungswandlereinheit verzichtet werden kann, wodurch insbesondere eine zuverlässige und wenig fehleranfällige Spannungsversorgung der zumindest einen weiteren Einheit ermöglicht wird. Alternativ oder zusätzlich wäre denkbar, dass die Spannungswandlereinheit einen Abwärtswandler und/oder einen Aufwärtswandler und/oder einen Inverswandler beinhaltet. Unter einer "Spannungskaskade" soll insbesondere eine bestimmte Anordnung von elektrischen Bauteilen der Spannungswandlereinheit innerhalb einer elektrischen Schaltung verstanden werden, welche insbesondere zu einer Wandlung und gegebenenfalls zusätzlich zu einer Gleichrichtung einer elektrischen Eingangsspannung vorgesehen ist. Die Spannungskaskade umfasst zumindest eine erste Stufe zu einer ersten Wandlung einer elektrischen Eingangsspannung. Erfindungsgemäß umfasst die Spannungskaskade zumindest zwei und besonders bevorzugt mehrere, insbesondere jeweils einzeln ansteuerbare Stufen zu einer weiteren und insbesondere flexiblen Wandlung einer elektrischen Eingangsspannung. Beispielsweise könnte die zumindest eine Spannungskaskade als eine "Villard-Schaltung" oder als eine "Greinacher-Schaltung" oder als eine "Delon-Schaltung" und besonders bevorzugt als eine "Cockcroft-Walton-Schaltung" ausgebildet sein, wobei sowohl einstufige und vorzugsweise mehrstufige Anordnungen sowie weitere sinnvolle Abwandlungen der genannten Schaltungstopologien denkbar sind. In Fällen, in denen die elektrische Eingangsspannung der Spannungswandlereinheit bereits als eine elektrische Gleichspannung vorliegt, ist zudem denkbar, dass die zumindest eine Spannungskaskade als eine "Ladungspumpe" und insbesondere als eine "Dickson-Ladungspumpe" ausgebildet ist, wobei sowohl einstufige und vorzugsweise mehrstufige Anordnungen von Ladungspumpen denkbar sind.

Unter einer "weiteren Einheit" soll insbesondere eine elektronische Verbrauchereinheit verstanden werden, welche insbesondere Teil des Induktionsenergieübertragungssystems und/oder der Aufnahmeeinheit sein kann. Alternativ wäre denkbar, dass es sich bei der weiteren Einheit um eine externe Einheit handelt, welche insbesondere direkt oder indirekt mit der Aufnahmeeinheit, beispielsweise über ein Kabel oder drahtlos, verbunden werden kann. Die weitere Einheit ist insbesondere verschieden von einer Steuereinheit. In wenigstens einem Betriebszustand verbraucht die weitere Einheit zumindest einen Teil der von dem zumindest einen Aufnahmeinduktionselement induktiv empfangenen Energie. Die weitere Einheit könnte beispielsweise eine Anzeigeeinheit und/oder eine Ausgabeeinheit und/oder eine Bedienerschnittstelle und/oder eine Beleuchtungseinheit und/oder eine Sensoreinheit und/oder eine andere Verbrauchereinheit sein.

Es wäre beispielsweise denkbar, dass die Aufnahmeeinheit frei von einer Steuereinheit ausgebildet ist und/oder eine Steuereinheit beispielsweise außerhalb der Aufnahmeeinheit angeordnet ist. Zudem ist denkbar, dass eine Steuereinheit mehrere Spannungsregler aufweist. Vorteilhaft weist die Aufnahmeeinheit zumindest eine Steuereinheit mit zumindest einem und vorzugsweise genau einem Spannungsregler auf, welcher dazu vorgesehen ist, eine Versorgungsspannung für die weitere Einheit einzustellen. Dadurch kann vorteilhaft eine zumindest im Wesentlichen stabile und/oder konstante Spannung, insbesondere eine zumindest im Wesentlichen stabile und/oder konstante elektrische Gleichspannung, zur Versorgung der weiteren Einheit bereitgestellt werden.

Unter einer "Steuereinheit" soll insbesondere eine elektronische Einheit verstanden werden, die insbesondere zu einer Steuerung und/oder Regelung zumindest der Aufnahmeinduktionselemente und/oder des Versorgungsinduktionselements und/oder der weiteren Einheit und/oder zumindest eines Spannungsreglers und/oder zumindest einer Schalteinheit der Aufnahmeeinheit vorgesehen ist. Vorzugsweise umfasst die Steuereinheit eine Recheneinheit und insbesondere zusätzlich zur Recheneinheit eine Speichereinheit mit zumindest einem darin gespeicherten Steuer- und/oder Regelprogramm, das dazu vorgesehen ist, von der Recheneinheit ausgeführt zu werden. Beispielsweise könnte die Steuereinheit Teil der Versorgungseinheit sein und insbesondere in einer Steuer- und/oder Regeleinheit der Versorgungseinheit wenigstens teilweise integriert sein und vorzugsweise als eine Kochfeldsteuerungseinheit ausgebildet sein. Alternativ könnte die Steuereinheit Teil einer externen Einheit sein. Die externe Einheit könnte insbesondere Teil des Induktionsenergieübertragungssystems sein und beispielsweise ein Mobilgerät und/oder ein Rechner und/oder eine externe Steuerungseinheit sein. Das Mobilgerät könnte beispielsweise ein Laptop und/oder ein Tablet und/oder ein Mobiltelefon sein. Vorzugsweise ist die Steuereinheit Teil der Aufnahmeeinheit und insbesondere wenigstens zu einem Großteil in der Aufnahmeeinheit integriert.

Unter einem "Spannungsregler" soll zumindest ein elektrisches und/oder elektronisches Bauteil verstanden werden, welches eine elektrische Spannung, insbesondere eine elektrische Gleichspannung, einstellt und insbesondere regelt und/oder stabilisiert. Der Spannungsregler regelt und/oder stabilisiert insbesondere eine von der Spannungswandlereinheit bereitgestellte elektrische Spannung, insbesondere eine elektrische Gleichspannung, welche insbesondere als eine Versorgungsspannung zu einer Versorgung der zumindest einen weiteren Einheit vorgesehen ist. Vorzugsweise ist der Spannungsregler ein Linearregler, insbesondere ein Längsregler und vorteilhaft ein Low-Drop-Spannungsregler und umfasst insbesondere zumindest einen Transistor, vorzugsweise einen pnp-Transitor. Alternativ oder zusätzlich könnte ein Spannungsregler auch ein Schaltregler oder ein Querregler oder eine Kombination aus Längsregler und Querregler sein.

Die Spannungskaskade weist zumindest eine Stufe auf. Erfindungsgemäß weist die Spannungskaskade mehrere Stufen zu einer Wandlung der elektrischen Spannung auf und die Steuereinheit eine Schalteinheit umfasst, welche in Abhängigkeit einer von der weiteren Einheit benötigten Versorgungsspannung eine geeignete Stufe der zumindest einen Spannungskaskade ansteuert. Hierdurch kann vorteilhaft die weitere Einheit insbesondere in einem optimierten und/oder einem für die weitere Einheit zugeschnittenen Spannungsbereich betrieben werden. Es kann insbesondere eine hohe Effizienz ermöglicht werden. Insbesondere können geringe elektrische Verluste erzielt werden.

Beispielsweise könnte die Aufnahmeeinheit zumindest eine Gleichrichtereinheit und/oder zumindest ein Gleichrichterelement aufweisen. Vorteilhaft ist die Spannungswandlereinheit dazu vorgesehen, zumindest eine elektrische Wechselspannung in zumindest eine elektrische Gleichspannung zu wandeln. Vorzugsweise erfolgt eine Wandlung der von dem Aufnahmeinduktionselement induktiv empfangenen elektrischen Wechselspannung innerhalb der zumindest einen Spannungskaskade der Spannungswandlereinheit. Die erste Spannungskaskade wandelt insbesondere eine erste Halbschwingung der elektrischen Wechselspannung, welche insbesondere eine erste halbe Periodendauer eines Wechselspannungsintervalls andauert, in eine elektrische Gleichspannung einer ersten elektrischen Polarität, beispielsweise einer positiven elektrischen Polarität. Hierdurch kann vorteilhaft auf eine separate elektrische Gleichrichtereinheit verzichtet werden, wodurch insbesondere vorteilhaft eine Anzahl von Baugruppen und/oder Bauelementen reduziert werden und eine insbesondere preisgünstige Aufnahmeeinheit zur Verfügung gestellt werden kann.

In einer weiteren Ausgestaltung wird vorgeschlagen, dass die Spannungswandlereinheit dazu vorgesehen ist, die elektrische Wechselspannung in zumindest eine weitere elektrische Gleichspannung mit zur Gleichspannung entgegengesetzter Polarität zu wandeln. Vorzugsweise weist die Spannungswandlereinheit hierzu zumindest eine weitere Spannungskaskade zu einer Wandlung der von dem Aufnahmeinduktionselement induktiv empfangenen elektrischen Wechselspannung auf. Die weitere Spannungskaskade ist vorteilhaft symmetrisch zu der ersten Spannungskaskade aufgebaut und wandelt eine zweite Halbschwingung einer elektrischen Wechselspannung, welche insbesondere eine zweite halbe Periodendauer eines Wechselspannungsintervalls andauert, in eine Gleichspannung einer zweiten gegenüber der ersten elektrischen Polarität entgegengesetzten elektrischen Polarität, beispielsweise einer negativen elektrischen Polarität. Hierdurch kann vorteilhaft eine insbesondere energieeffiziente Spannungsversorgung der zumindest einen weiteren Einheit ermöglicht werden. Zudem kann hierdurch vorteilhaft eine bipolare und insbesondere symmetrische Gleichspannungsversorgung der zumindest einen weiteren Einheit ermöglicht werden.

Ferner wird vorgeschlagen, dass die Spannungswandlereinheit zumindest eine Cockcroft-Walton-Schaltung umfasst. Hierdurch kann eine Wandlung einer elektrischen Spannung, insbesondere einer elektrischen Wechselspannung mit besonders einfachen technischen Mitteln realisiert werden. Vorteilhaft umfasst die Spannungswandlereinheit zumindest eine einstufige, vorzugsweise zumindest eine zweistufige und besonders bevorzugt zumindest eine mehrstufige Cockcroft-Walton-Schaltung. Alternativ oder zusätzlich wäre denkbar, dass die Spannungswandlereinheit zumindest eine "Villard-Schaltung" und/oder zumindest eine "Greinacher-Schaltung" und/oder zumindest eine "Delon-Schaltung" umfasst, wobei sowohl einstufige und vorzugsweise mehrstufige Anordnungen sowie weitere sinnvolle Abwandlungen der genannten Schaltungstopologien denkbar sind. In Fällen, in denen die Aufnahmeeinheit zusätzlich zumindest eine Gleichrichtereinheit und/oder zumindest ein Gleichrichterelement aufweist, welche der Spannungswandlereinheit eine elektrische Gleichspannung liefern, ist zudem denkbar, dass die zumindest eine Spannungskaskade als eine "Ladungspumpe" und insbesondere als eine "Dickson-Ladungspumpe" ausgebildet ist, wobei sowohl einstufige und vorzugsweise mehrstufige Anordnungen von Ladungspumpen denkbar sind.

Beispielsweise könnte die Aufnahmeeinheit zumindest ein zweites Aufnahmeinduktionselement aufweisen, wobei die Aufnahmeinduktionselemente Teil zumindest zweier verschiedener Sekundärspulen sind. Vorteilhaft wird vorgeschlagen, dass die Aufnahmeeinheit zumindest ein zweites Aufnahmeinduktionselement aufweist, welches mit dem ersten Aufnahmeinduktionselement Teil einer gemeinsamen Sekundärspule ist. Die Aufnahmeinduktionselemente sind insbesondere elektrisch in Reihe geschaltet, wobei jedes Aufnahmeinduktionselement separat zu oder abgeschaltet werden kann. Ein Zu- und/oder Abschalten eines Aufnahmeinduktionselements erfolgt durch die Steuereinheit und insbesondere durch die Schalteinheit der Steuereinheit. Hierdurch kann eine insbesondere optimale Spannungsversorgung insbesondere der zumindest einen weiteren Einheit sichergestellt werden. Zudem kann insbesondere auf eine Vielzahl verschiedener Sekundärspulen verzichtet werden, wodurch insbesondere Kosten insbesondere Lagerhaltungskosten eingespart werden können.

Es wäre beispielsweise denkbar, dass das Induktionsenergieübertragungssystem die zumindest eine Aufnahmeeinheit umfasst, wobei eine Versorgungseinheit nicht Teil des Induktionsenergieübertragungssystems, sondern Teil eines separaten weiteren Systems ist. Eine solche Ausgestaltung wäre insbesondere in Fällen denkbar, in denen die Aufnahmeeinheit des Induktionsenergieübertragungssystems als ein Fortbewegungsmittel, insbesondere als ein Elektrokraftfahrzeug oder ein Hybridkraftfahrzeug oder als ein Elektrofahrrad oder als ein Elektroroller oder als ein anderes voll- oder teilelektrisch betriebenes Fortbewegungsmittel ausgebildet und eine Versorgungseinheit beispielsweise als eine in einer Parkmöglichkeit integrierte Ladestation ausgebildet und als solche nicht Teil des Induktionsenergieübertragungssystems ist. Vorteilhaft umfasst das Induktionsenergieübertragungssystem zumindest eine Versorgungseinheit, welche zumindest ein Versorgungsinduktionselement aufweist, welches zur Bereitstellung eines magnetischen Wechselfelds für das Aufnahmeinduktionselement vorgesehen ist. Hierdurch kann vorteilhaft eine insbesondere optimierte Energieversorgung des zumindest einen Aufnahmeinduktionselements bereitgestellt werden. Vorteilhaft können das zumindest eine Aufnahmeinduktionselement und das zumindest einen Versorgungsinduktionselement insbesondere optimal aufeinander abgestimmt sein, wodurch insbesondere elektrische Verluste minimiert werden können.

Die Versorgungseinheit könnte beispielsweise als eine Ladeeinheit zum induktiven Aufladen zumindest eines Mobilgeräts, wie beispielsweise eines Laptops und/oder eines Tablets und/oder eines Mobiltelefons und/oder als eine Ladestation für ein induktives Aufladen eines Fortbewegungsmittels, insbesondere eines Elektrokraftfahrzeugs und/oder eines Elektrofahrrads und/oder eines Elektrorollers, ausgebildet sein. Vorzugsweise ist die Versorgungseinheit als ein Gargerät, insbesondere als ein Induktionsgargerät, wie beispielsweise als ein Kochfeld, insbesondere als ein Induktionskochfeld und/oder als ein Backofen, insbesondere als ein Induktionsbackofen, und/oder als ein Grill, insbesondere als ein Induktionsgrill, ausgebildet. Insbesondere beheizt die Versorgungseinheit mittels der von dem Versorgungsinduktionselement bereitgestellten Energie zumindest einen Teil der Aufnahmeeinheit, insbesondere zumindest einen Aufnahmeraum der Aufnahmeeinheit. Dadurch kann die Aufnahmeeinheit insbesondere mit der für die Aufnahmeeinheit vorgesehenen Energie versorgt werden, wodurch insbesondere optimale Garergebnisse und/oder eine zuverlässige Funktionstüchtigkeit von in der Aufnahmeeinheit integrierten elektrischen und/oder elektronischen Einheiten, insbesondere der zumindest einen weiteren Einheit, erreicht werden.

Die Aufnahmeeinheit könnte beispielsweise als ein mobiles Gerät, wie beispielsweise ein Laptop und/oder ein Tablet und/oder ein Mobiltelefon, und/oder als eine Handwerkzeugmaschine und/oder als ein selbstfahrendes Arbeitsgerät und/oder als eine Fernsteuerung und/oder als eine Fernbedienung ausgebildet sein. Ferner könnte die Aufnahmeeinheit als ein Fortbewegungsmittel, wie beispielsweise als ein Elektrokraftfahrzeug und/oder ein Hybridkraftfahrzeug und/oder als ein Elektrofahrrad und/oder als ein Elektroroller und/oder als ein anderes voll- oder teilelektrisch angetriebenes Fortbewegungsmittel ausgebildet sein. In einer vorteilhaften Ausgestaltung der vorliegenden Erfindung wird vorgeschlagen, dass die Aufnahmeeinheit als ein Gargeschirr, insbesondere als ein Induktionsgargeschirr, ausgebildet ist. Die als Gargeschirr ausgebildete Aufnahmeeinheit weist zumindest ein Aufnahmeinduktionselement auf, welches als eine Sekundärspule ausgebildet ist. Das Aufnahmeinduktionselement versorgt zumindest ein elektrisches Heizelement, vorzugsweise ein elektrisches Widerstandsheizelement, mit einem Teil der von dem Versorgungsinduktionselement empfangenen Energie. Zudem versorgt das Aufnahmeinduktionselement zumindest eine weitere Einheit mit einem weiteren Teil der empfangenen Energie, wobei die weitere Einheit an oder in dem Gargeschirr angeordnet und beispielsweise als eine Sensoreinheit zur Messung von zumindest einem Betriebsparameter, zum Beispiel einer Temperatur, vorgesehen sein könnte. Hierdurch kann vorteilhaft zumindest ein während eines Garprozesses in dem Aufnahmeraum des Gargeschirrs angeordnetes Gargut präzise mit der für einen jeweiligen Garprozess vorgesehenen Energie versorgt werden, wodurch insbesondere optimale Garergebnisse erzielt werden können. Ferner kann vorteilhaft zumindest eine an oder in dem Gargeschirr angeordnete weitere Einheit optimal mit Energie versorgt werden.

In einer alternativen vorteilhaften Ausgestaltung der vorliegenden Erfindung kann die Aufnahmeeinheit als eine Unterlegeinheit zur Aufstellung eines Gargeschirrs ausgebildet sein. Beispielsweise könnte eine als Unterlegeinheit ausgebildete Aufnahmeeinheit aus zumindest einem magnetischen, insbesondere aus zumindest einem ferromagnetischen, Material bestehen und kann hierdurch vorteilhaft insbesondere eine Beheizung eines induktionsuntauglichen und/oder nicht-magnetischen, insbesondere eines nichtferromagnetischen Gargeschirrs mittels der von dem Versorgungsinduktionselement bereitgestellten Energie ermöglichen. Ferner kann dadurch vorteilhaft eine Übertragung von Wärme von dem Gargeschirr auf eine Aufstellplatte wenigstens im Wesentlichen verhindert werden.

Die Erfindung geht ferner aus von einem Verfahren zum Betrieb eines Induktionsenergieübertragungssystems, insbesondere eines Induktionsgarsystems, mit zumindest einem Aufnahmeinduktionselement, welches in einem Betriebszustand induktiv bereitgestellte Energie empfängt.

Es wird vorgeschlagen, dass eine elektrische Spannung des Aufnahmeinduktionselements für eine Energieversorgung zumindest einer weiteren Einheit gewandelt wird. Die Wandlung der Spannung erfolgt vorzugsweise durch eine mit dem Aufnahmeinduktionselement verbundene Spannungswandlereinheit. Hierdurch kann vorteilhaft die zumindest eine weitere Einheit insbesondere optimal mit Energie versorgt werden.

Das Induktionsenergieübertragungssystem soll hierbei nicht auf die oben beschriebene Anwendung und Ausführungsform beschränkt sein. Insbesondere kann das Induktionsenergieübertragungssystem zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt.

Es zeigen:
- Fig. 1: ein Induktionsenergieübertragungssystem mit einer als Gargeschirr ausgebildeten Aufnahmeeinheit in einer schematischen Draufsicht,
- Fig. 2: das Induktionsenergieübertragungssystem in einer schematischen Schnittdarstellung,
- Fig. 3: ein Schaltdiagramm der Aufnahmeeinheit mit einer Spannungswandlereinheit in einer schematischen Darstellung,
- Fig. 4: zwei beispielhafte Aktivierungssequenzen des Induktionsenergieübertragungssystems in jeweils drei Diagrammen, in welchen eine Leistung, ein elektromagnetisches Feld und eine Spannung jeweils über einer Frequenz aufgetragen sind, in einer schematischen Darstellung,
- Fig. 5: eine alternative Ausgestaltung eines Induktionsenergieübertragungssystems mit einer als Unterlegeinheit ausgebildeten Aufnahmeeinheit in einer schematischen Darstellung und
- Fig. 6: ein Schaltdiagramm einer Spannungswandlereinheit eines weiteren Ausführungsbeispiels eines Induktionsenergieübertragungssystems in einer schematischen Darstellung.

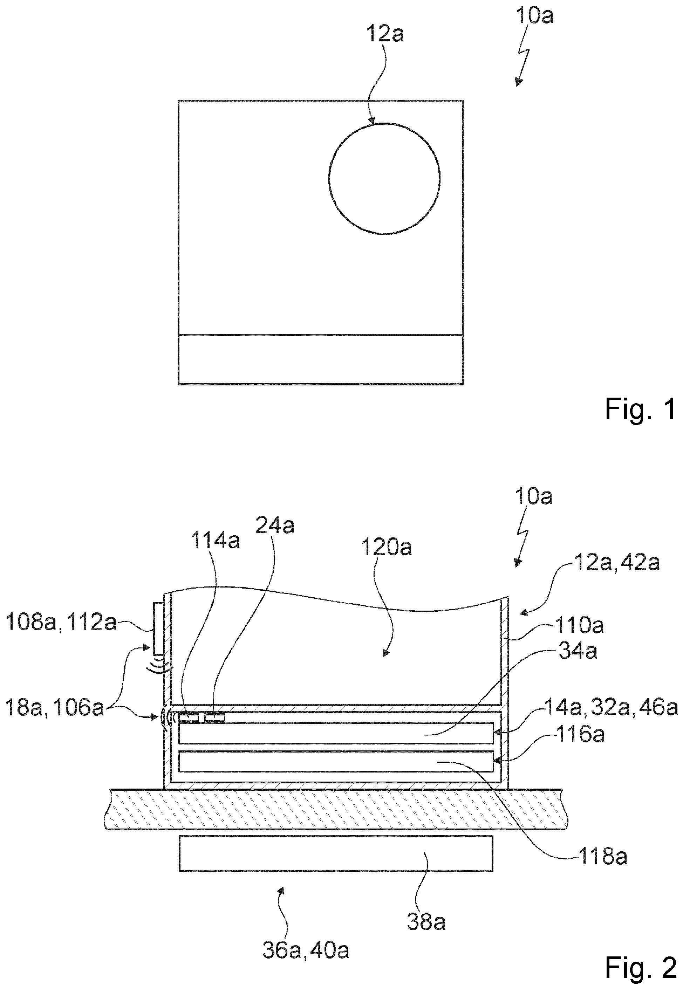

Figur 1 zeigt ein Induktionsenergieübertragungssystem 10a, welches als ein Induktionsgarsystem ausgebildet ist. Im vorliegenden Ausführungsbeispiel ist das Induktionsenergieübertragungssystem 10a als ein Induktionskochsystem ausgebildet. Das Induktionsenergieübertragungssystem 10a weist eine Aufnahmeeinheit 12a auf, welche als ein Gargeschirr 42a ausgebildet ist.

Gemäß Figur 2 weist die Aufnahmeeinheit 12a eine Gehäuseeinheit 110a auf. Die Gehäuseeinheit 110a ist als eine Außengehäuseeinheit ausgebildet und bildet in dem Betriebszustand ein Außengehäuse der Aufnahmeeinheit 12a aus. Die Aufnahmeeinheit 12a weist einen Aufnahmeraum 120a zu einer Aufnahme von Lebensmitteln auf.

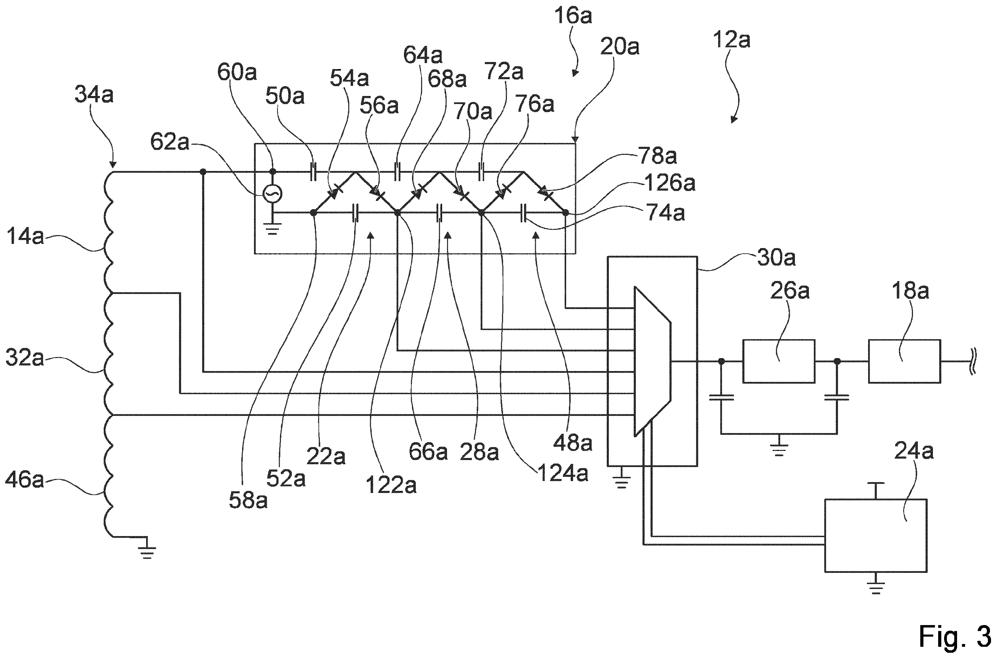

Die Aufnahmeeinheit 12a weist mehrere Aufnahmeinduktionselemente 14a, 32a, 46a auf. Ein erstes Aufnahmeinduktionselement 14a, ein zweites Aufnahmeinduktionselement 32a und ein drittes Aufnahmeinduktionselement 46a der Aufnahmeeinheit 12a sind jeweils zu einem Empfang einer induktiv bereitgestellten Energie vorgesehen. Das erstes Aufnahmeinduktionselement 14a, das zweite Aufnahmeinduktionselement 32a und das dritte Aufnahmeinduktionselement 46a sind Teil einer gemeinsamen Sekundärspule 34a (vgl. Fig. 3). Zudem weist die Aufnahmeeinheit 12a ein weiteres Aufnahmeinduktionselement 116a auf, welches Teil einer weiteren Sekundärspule 118a ist und ebenfalls zu einem Empfang einer induktiv bereitgestellten Energie vorgesehen ist. Alternativ könnte die Aufnahmeeinheit 12a eine größere Anzahl an Aufnahmeinduktionselementen 14a, 32a, 46a aufweisen, wie beispielsweise zumindest fünf, vorteilhaft zumindest sechs und vorzugsweise mehrere Aufnahmeinduktionselemente 14a, 32a, 46a. In diesen und den folgenden Ausführungsbeispielen sind beispielhaft jeweils die drei Aufnahmeinduktionselemente 14a, 32a, 46a beschrieben, jedoch kann eine Anzahl beliebig gewählt werden und die Beschreibung insbesondere auf eine andere Anzahl an Aufnahmeinduktionselementen übertragen werden.

Das Aufnahmeinduktionselement 14a bildet einen ersten Spulenabschnitt der Sekundärspule 34a aus. Das zweite Aufnahmeinduktionselement 32a weist das erste Aufnahmeinduktionselement 14a und zusätzlich hierzu einen zweiten Spulenabschnitt der Sekundärspule 34a auf, welcher insbesondere elektrisch in Reihe mit dem ersten Spulenabschnitt geschaltet ist. Das dritte Aufnahmeinduktionselement 46a weist das erste Aufnahmeinduktionselement 14a und das zweite Aufnahmeinduktionselement 32a und zusätzlich hierzu einen dritten Spulenabschnitt der Sekundärspule 34a auf, welcher insbesondere elektrisch in Reihe mit dem ersten Spulenabschnitt und dem zweiten Spulenabschnitt geschaltet ist.

Die Aufnahmeinduktionselemente 14a, 32a, 46a versorgen in zumindest einem Betriebszustand eine weitere Einheit 18a. In dem Betriebszustand sind die Aufnahmeinduktionselemente 14a, 32a, 46a zu einer Energieversorgung einer weiteren Einheit 18a vorgesehen. Die weitere Einheit 18a ist Teil der Aufnahmeeinheit 12a.

Die weitere Einheit 18a ist teilweise innerhalb der Gehäuseeinheit 110a integriert. Die weitere Einheit 18a ist teilweise an der Gehäuseeinheit 110a angeordnet. Die weitere Einheit 18a ist eine von einer Steuereinheit 24a der Aufnahmeeinheit 12a des Induktionsenergieübertragungssystem 10a verschiedene Elektronikeinheit.

Die weitere Einheit 18a weist im vorliegenden Ausführungsbeispiel eine Bedienerschnittstelle 106a auf. Die weitere Einheit 18a und insbesondere die Bedienerschnittstelle 106a weist eine Eingabeeinheit 108a auf, welche zu einer Eingabe von Betriebsparametern vorgesehen ist. Die weitere Einheit 18a und insbesondere die Bedienerschnittstelle 106a weist eine Ausgabeeinheit 112a auf, welche zu einer Ausgabe von Betriebsparametern, an einen Bediener vorgesehen ist. Die weitere Einheit 18a und insbesondere die Bedienerschnittstelle 106a weist eine Bedienelektronik 114a auf, welche zu einer Verarbeitung von Betriebsparametern vorgesehen ist. Die Eingabeeinheit 108a und die Ausgabeeinheit 112a sind teilweise einstückig ausgebildet.

Das Induktionsenergieübertragungssystem 10a weist eine Versorgungseinheit 36a auf. Die Versorgungseinheit 36a ist als ein Gargerät 40a, und zwar als ein Induktionskochfeld, ausgebildet. Die Versorgungseinheit 36a ist dazu vorgesehen, induktiv eine Energie zu einer Erhitzung von in dem Aufnahmeraum 120a der Aufnahmeeinheit 12a befindlichen Lebensmitteln bereitzustellen.

Die Versorgungseinheit 36a weist ein Versorgungsinduktionselement 38a auf. Das Versorgungsinduktionselement 38a ist zu einer Bereitstellung eines magnetischen Wechselfeldes für das erste Aufnahmeinduktionselement 14a, das zweite Aufnahmeinduktionselement 32a, das dritte Aufnahmeinduktionselement 46a und das weitere Aufnahmeinduktionselement 116a vorgesehen. Durch das von dem Versorgungsinduktionselement 38a induktiv bereitgestellte magnetische Wechselfeld kann in wenigstens einem Betriebszustand eine Energie durch die Aufnahmeinduktionselemente 14a, 32a, 46a und durch das weitere Aufnahmeinduktionselement 116a induktiv empfangen werden. Die Aufnahmeeinheit 12a umfasst zumindest ein elektrisches Heizelement (nicht dargestellt), welches mit einem Teil der durch die Aufnahmeinduktionselemente 14a, 32a, 46a empfangenen Energie betrieben und zu einer Erhitzung zumindest eines in dem Aufnahmeraum 120a befindlichen Garguts vorgesehen ist.

Figur 3 zeigt ein elektrisches Schaltdiagramm der Aufnahmeeinheit 12a in einer schematischen Darstellung. Die Aufnahmeeinheit 12a umfasst eine Spannungswandlereinheit 16a, welche zu einer Wandlung einer elektrischen Spannung für eine Energieversorgung der weiteren Einheit 18a vorgesehen ist. Die Spannungswandlereinheit 16a ist dazu vorgesehen, zumindest eine elektrische Wechselspannung in zumindest eine elektrische Gleichspannung zu wandeln. Die Aufnahmeeinheit 12a weist die Steuereinheit 24a mit einem Spannungsregler 26a auf. Der Spannungsregler 26a ist dazu vorgesehen, zumindest eine Versorgungsspannung für die weitere Einheit 18a einzustellen. Die Steuereinheit 24a umfasst eine Schalteinheit 30a. Das Aufnahmeinduktionselement 14a ist elektrisch leitend mit der Spannungswandlereinheit 16a verbunden. Die Aufnahmeinduktionselemente 14a, 32a, 46a sind über die Schalteinheit 30a jeweils elektrisch leitend mit dem Spannungsregler 26a und der Steuereinheit 24a verbunden. Das Aufnahmeinduktionselement 14a ist elektrisch leitend mit der Spannungswandlereinheit 16a verbunden.

Die Spannungswandlereinheit 16a beinhaltet eine Spannungskaskade 20a. Die Spannungskaskade 20a umfasst eine erste Stufe 22a, eine zweite Stufe 28a und eine dritte Stufe 48a. Die erste Stufe 22a, die zweite Stufe 28a und die dritte Stufe 48a sind jeweils über die Schalteinheit 30a elektrisch leitend mit den Spannungsregler 26a und mit der Steuereinheit 24a verbunden. In Abhängigkeit einer von der weiteren Einheit 18a benötigten Versorgungsspannung steuert die Schalteinheit 30a eine geeignete der Stufen 22a, 28a, 48a der Spannungskaskade 20a an.

Im vorliegenden Ausführungsbeispiel umfasst die Spannungswandlereinheit 16a eine Cockcroft-Walton-Schaltung. Die Spannungskaskade 20a der Spannungswandlereinheit 16a ist als eine dreistufige Cockcroft-Walton-Spannungskaskade mit der ersten Stufe 22a, der zweiten Stufe 28a und der dritten Stufe 48a ausgebildet. Nachfolgend soll die Funktionsweise einer Spannungswandlung in der erste Stufe 28a anhand der Spannungskaskade 20a der Spannungswandlereinheit 16a beschrieben werden, wobei nachfolgend vereinfachend eine ideale verlustfreie Spannungswandlereinheit 16a betrachtet wird. Die erste Stufe 22a umfasst ein erstes Kondensatorelement 50a, ein zweites Kondensatorelement 52a, ein erstes Diodenelement 54a und ein zweites Diodenelement 56a.

Mit einem Teil der induktiv empfangenen Energie stellt das Aufnahmeinduktionselement 14a eine Wechselspannung für die Spannungswandlereinheit 16a zur Verfügung und kann als eine Wechselspannungsquelle 62a betrachtet werden. Die Wechselspannungsquelle 62a hat einen ersten Anschlusspunkt 58a und einen zweiten Anschlusspunkt 60a. In einem Betriebszustand besteht zwischen dem ersten Anschlusspunkt 58a und dem zweiten Anschlusspunkt 60a ein elektrischer Potentialunterschied, welcher einem Betrag einer Spannung der Wechselspannungsquelle 62a entspricht. Während einer ersten Halbschwingung einer ersten halben Periodendauer eines ersten Wechselspannungsintervalls liegt der erste Anschlusspunkt 58a auf einem Referenzpotential und der zweite Anschlusspunkt 60a auf einem Potential einer ersten elektrischen Polarität. Während einer zweiten Halbschwingung einer zweiten halben Periodendauer des ersten Wechselspannungsintervalls der Wechselspannungsquelle 62a liegt der erste Anschlusspunkt 58a auf einem Referenzpotential und der zweite Anschlusspunkt 60a auf einem Potential einer der ersten elektrischen Polarität entgegengesetzten zweiten elektrischen Polarität. Das erste Diodenelement 54a der ersten Stufe 22a ist mit seiner Anode über den ersten Anschlusspunkt 58a mit der Wechselspannungsquelle 62a elektrisch leitend verbunden. Eine erste Elektrode des erste Kondensatorelements 50a der ersten Stufe 22a ist über einen zweiten Anschlusspunkt 60a mit dem Aufnahmeinduktionselement 14a elektrisch leitend verbunden Das erste Diodenelement 54a ist mit seiner Kathode mit einer zweiten Elektrode des ersten Kondensatorelements 50a elektrisch leitend verbunden. Während der ersten Halbschwingung des ersten Wechselspannungsintervalls fliest ein Strom der ersten elektrischen Polarität von dem ersten Anschlusspunkt 58a der Wechselspannungsquelle 62a in Durchlassrichtung durch das erste Diodenelement 54a und lädt das erste Kondensatorelement 50a auf. Zwischen den Elektroden des ersten Kondensatorelements 50a besteht ein Potentialunterschied, dessen Betrag der Spannung der Wechselspannungsquelle 62a entspricht. Während der zweiten Halbschwingung des ersten Wechselspannungsintervalls fließt ein Strom der zweiten elektrischen Polarität von dem zweiten Anschlusspunkt 60a der Wechselspannungsquelle 62a in Richtung des ersten Kondensatorelements 50a. Während dieser zweiten Halbschwingung sperrt das erste Diodenelement 54a in Sperrrichtung den Stromfluss der zweiten Polarität und das Potential der Wechselspannungsquelle 62a und das Potential zwischen den Elektroden des ersten Kondensatorelements 50a addieren sich auf. Die zweite Elektrode des ersten Kondensatorelements 50a liegt nach einem ersten Wechselspannungsintervall auf einem größeren elektrischen Potential, dessen Betrag dem doppelten Betrag der Spannung der Wechselspannungsquelle 62a entspricht.

Die Anode des zweiten Diodenelements 56a ist mir der zweiten Elektrode des ersten Kondensatorelements 50a elektrisch leitend verbunden. Die Kathode des zweiten Diodenelements 56a ist mit einer ersten Elektrode des zweiten Kondensatorelements 52a elektrisch leitend verbunden. Eine zweite Elektrode des zweiten Kondensatorelements 52a ist mit dem ersten Anschlusspunkt 58a der Wechselspannungsquelle 62a elektrisch leitend verbunden. Während der zweiten Halbschwingung lädt sich das zweite Kondensatorelement 52a auf das größere Potential der zweiten Elektrode des ersten Kondensatorelements 50a auf. Die durch das Aufnahmeinduktionselement 14a als eine Eingangswechselspannung für die Spannungswandlereinheit 16a bereitgestellte Spannung ist durch die erste Stufe 22a der Spannungskaskade 20a in eine Ausgangsgleichspannung eines größeren Betrags gewandelt. Ist die erste Stufe 22a der Spannungskaskade 20a mit der Schalteinheit 30a über einen dritten Anschlusspunkt 122 elektrisch leitend verbunden, so kann die Ausgangsgleichspannung der ersten Stufe 22a der Spannungswandlereinheit 16a, zu einer Versorgung der weiteren Einheit 18a abgegriffen werden. An dem dritten Anschlusspunkt 122a entspricht der Betrag der Ausgangsgleichspannung der ersten Stufe 22a dem doppelten Betrag der Eingangswechselspannung der Spannungswandlereinheit 16a.

Die zweite Stufe 28a weist ein drittes Kondensatorelement 64a, ein viertes Kondensatorelement 66a, ein drittes Diodenelement 68a und ein viertes Diodenelement 70a auf. Das dritte Diodenelement 68a ist anodenseitig mit dem zweiten Kondensatorelement 52a der ersten Stufe 22a verbunden. Die Diodenelemente 68a, 70a und die Kondensatorelemente 64a, 66a der zweiten Stufe 28a sind auf gleiche Weise miteinander verschaltet wie die Diodenelemente 54a, 56a und die Kondensatorelemente 50a, 52 der ersten Stufe 22a. Ist die zweite Stufe 28a über einen vierten Anschlusspunkt 124a mit der Schalteinheit 30a elektrisch leitend verbunden, kann das zweite Kondensatorelement 52a der ersten Stufe 22a als Spannungsquelle für die zweite Stufe 28a betrachtet werden. Ein Betrag der durch die erste Stufe 22a zur Verfügung gestellten Gleichspannung kann in der zweiten Stufe 28a weiter vergrößert werden, wobei diese weitere Vergrößerung analog zu der oben beschriebenen Vergrößerung durch die erste Stufe 22a erfolgt. An dem vierten Anschlusspunkt 124a entspricht die Ausgangsgleichspannung der zweiten Stufe 28a einem dreifachen Betrag der Eingangswechselspannung der ersten Stufe 22a. Die dritte Stufe 48a weist ein fünftes Diodenelement 76a, ein sechstes Diodenelement 78a, ein fünftes Kondensatorelement 72a und ein sechstes Kondensatorelement 74a auf, welche analog zu der ersten Stufe 22a und der zweiten Stufe 28a miteinander verschaltet sind. Ist die dritte Stufe 48a über einen fünften Anschlusspunkt 126a mit der Schalteinheit 30a verbunden, kann ein Betrag der Spannung durch den Stufen 22a und 28a entsprechende elektrische Vorgänge noch weiter vergrößert werden. Die Ausgangsgleichspannung der dritten Stufe 48a der Spannungskaskade 20a entspricht dem vierfachen Betrag der Eingangswechselspannung der ersten Stufe 22a.

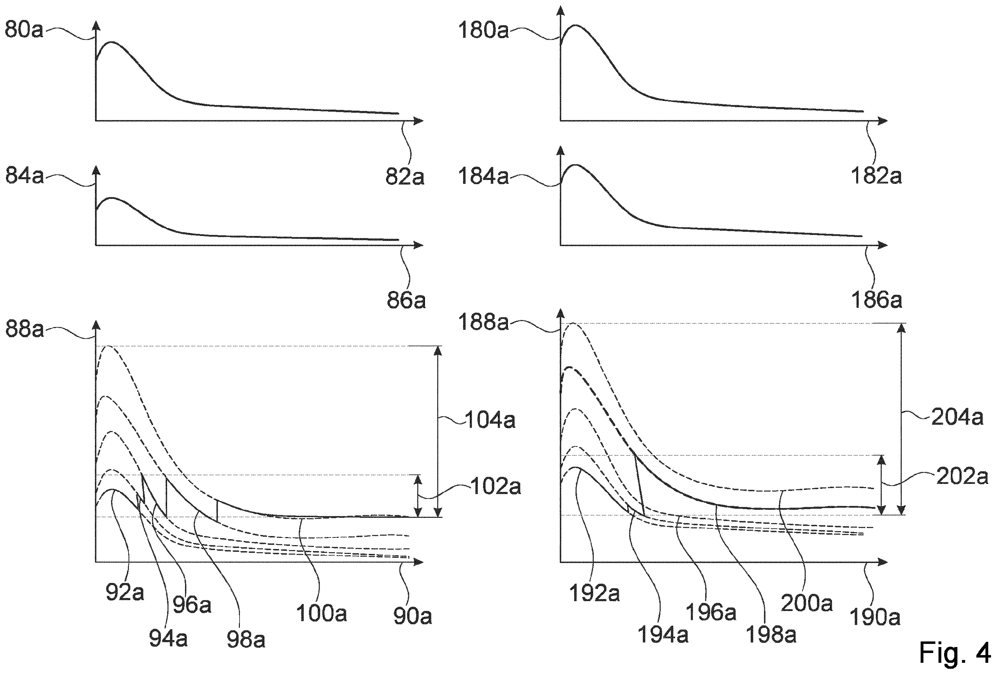

Figur 4 zeigt auf der linken Seite eine erste Zusammenschau von drei Diagrammen zur Darstellung einer ersten beispielhaften Aktivierungssequenz des Induktionsenergieübertragungssystems 10a. Auf einer Ordinatenachse 80a eines ersten Diagramms ist eine elektrische Leistung aufgetragen, auf einer Abszissenachse 82a des ersten Diagramms ist eine Frequenz aufgetragen. Auf einer Ordinatenachse 84a eines zweiten Diagramms ist ein elektromagnetisches Feld aufgetragen, auf einer Abszissenachse 86a des zweiten Diagramms ist eine Frequenz aufgetragen. Auf einer Ordinatenachse 88a eines dritten Diagramms ist eine elektrische Spannung aufgetragen, auf einer Abszissenachse 90a des dritten Diagramms ist eine Frequenz aufgetragen. Die drei Diagramme stellen eine erste beispielhafte Aktivierungssequenz dar. Eine erste Spannungskurve 92a in dem dritten Diagramm beschreibt eine in dem ersten Aufnahmeinduktionselement 14a induzierte Spannung. Eine zweite Spannungskurve 94a beschreibt eine in dem zweiten Aufnahmeinduktionselement 32a induzierte Spannung. Eine dritte Spannungskurve 96a beschreibt eine in dem dritten Aufnahmeinduktionselement 46a induzierte Spannung. Eine vierte Spannungskurve 98a beschreibt eine in dem dritten Aufnahmeinduktionselement 46a induzierte Spannung, welche durch die erste Stufe 22a der Spannungswandlereinheit 16a gewandelt ist. Eine fünfte Spannungskurve 100a beschreibt eine in dem dritten Aufnahmeinduktionselement 46a induzierte Spannung, welche durch die zweite Stufe 28a der Spannungswandlereinheit 16a gewandelt ist. In der ersten beispielhaften Aktivierungssequenz des Induktionsenergieübertragungssystems 10a steuert die Steuereinheit 24a über die Schalteinheit 30a zu einer Energieversorgung der weiteren Einheit 18a zuerst das erste Aufnahmeinduktionselement 14a, danach das zweite Aufnahmeinduktionselement 32a, dann das dritte Aufnahmeinduktionselement 46a, anschließend die erste Stufe 22a der Spannungswandlereinheit 16a und schließlich die zweite Stufe 28a der Spannungswandlereinheit 16a an (vgl. Fig. 3). Durch ein Ansteuern einer unterschiedlichen Anzahl an Aufnahmeinduktionselementen 14a, 32a und 46a der gemeinsamen Sekundärspule 34a und/oder durch ein Ansteuern der verschiedenen Stufen 22a, 28a und 48a hält die Steuereinheit 24a in dem Betriebszustand eine zu der Energieversorgung der weiteren Einheit 18a bereitgestellte Energie innerhalb eines Energieversorgungsspannungsintervalls 102a, welches insbesondere einer optimalen Versorgungsspannung der weiteren Einheit 18a entspricht.

Auf der rechten Seite in Figur 4 ist in eine weitere Zusammenschau von drei weiteren Diagrammen einer weiteren beispielhaften Aktivierungssequenz des Induktionsenergieübertragungssystems 10a dargestellt. Auf einer Ordinatenachse 180a eines weiteren ersten Diagramms ist eine elektrische Leistung aufgetragen, auf einer Abszissenachse 182a des weiteren ersten Diagramms ist eine Frequenz aufgetragen. Auf einer Ordinatenachse 184a eines weiteren zweiten Diagramms ist ein elektromagnetisches Feld aufgetragen, auf einer Abszissenachse 186a des weiteren zweiten Diagramms ist eine Frequenz aufgetragen. Auf einer Ordinatenachse 188a eines weiteren dritten Diagramms ist eine elektrische Spannung aufgetragen, auf einer Abszissenachse 190a des weiteren dritten Diagramms ist eine Frequenz aufgetragen. Eine weitere erste Spannungskurve 192a beschreibt eine weitere in dem ersten Aufnahmeinduktionselement 14a induzierte Spannung. Eine weitere zweite Spannungskurve 194a beschreibt eine weitere in dem zweiten Aufnahmeinduktionselement 32a induzierte Spannung. Eine weitere dritte Spannungskurve 196a beschreibt eine weitere in dem dritten Aufnahmeinduktionselement 46a induzierte Spannung. Eine weitere vierte Spannungskurve 198a beschreibt eine weitere in dem dritten Aufnahmeinduktionselement 46a induzierte Spannung, welche durch die erste Stufe 22a der Spannungswandlereinheit 16a verstärkt ist. Eine weitere fünfte Spannungskurve 200a beschreibt eine weitere in dem dritten Aufnahmeinduktionselement 46a induzierte Spannung, welche durch die zweite Stufe 28a der Spannungswandlereinheit 16a verstärkt ist. In der weiteren beispielhaften Aktivierungssequenz des Induktionsenergieübertragungssystems 10a steuert die Steuereinheit 24a über die Schalteinheit 30a zu einer Energieversorgung der weiteren Einheit 18a zuerst das erste Aufnahmeinduktionselement 14a, danach das dritte Aufnahmeinduktionselement 46a und anschließend die erste Stufe 22a der Spannungswandlereinheit 16a an, um eine zu der Energieversorgung der weiteren Einheit 18a bereitgestellte Energie innerhalb eines weiteren Energieversorgungsspannungsintervalls 202 zu halten.

In einem Vergleich zu den Energieversorgungsspannungsintervallen 102a und 202a sind in dem dritten Diagramm und dem weiteren dritten Diagramm Spannungsintervalle 104a und 204a für den Fall einer direkten Ansteuerung der dritten Stufe 48a durch die Steuereinheit 24a, dargestellt. Zu erkennen ist, dass die Spannungsintervalle 104a und 204a in beiden dargestellten Beispielen jeweils eine wesentlich größere Amplitude aufweisen als die Energieversorgungsspannungsintervalle 102a und 202a und damit insbesondere eine höhere Beanspruchung von elektronischen und/oder elektrischen Objekten der Aufnahmeeinheit 12a, insbesondere des Spannungsreglers 26a, resultieren würde.

In einem Verfahren zu einem Betrieb des Induktionsenergieübertragungssystems 10a empfängt das zumindest eine Aufnahmeinduktionselement 14a eine induktiv bereitgestellte Energie, wobei eine elektrische Spannung des Aufnahmeinduktionselements 14a für eine Energieversorgung der zumindest einen weiteren Einheit 18a gewandelt wird. Vorliegend stellt das Versorgungsinduktionselement 38a induktiv eine Energie zu einem Empfang durch das zumindest eine Aufnahmeinduktionselement 14a bereit (vgl. Fig. 2). Eine elektrische Spannung des Aufnahmeinduktionselements 14a wird durch die Spannungswandlereinheit 16a zu einer Energieversorgung der weiteren Einheit 18a gewandelt (vgl. Fig. 3).

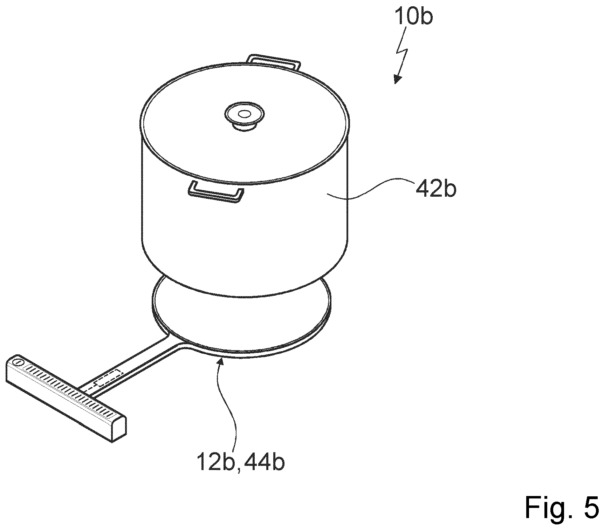

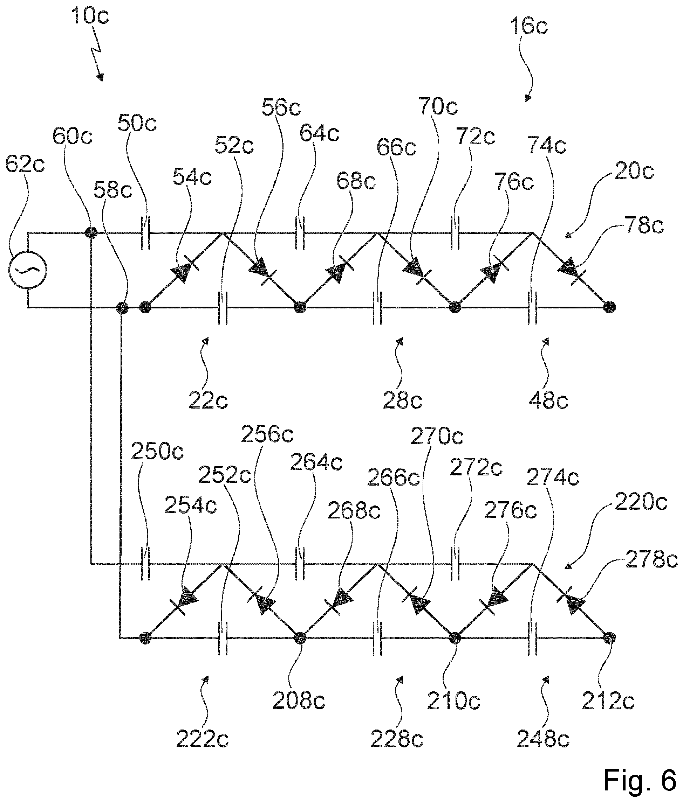

In den Figuren 5 und 6 sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung des Ausführungsbeispiels der Figuren 1 bis 4 verwiesen werden kann. Zur Unterscheidung der Ausführungsbeispiele ist der Buchstabe a in den Bezugszeichen des Ausführungsbeispiels in den Figuren 1 bis 4 durch die Buchstaben b und c in den Bezugszeichen der Ausführungsbeispiele der Figuren 5 und 6 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 4 verwiesen werden.

Figur 5 zeigt ein weiteres Ausführungsbeispiel eines Induktionsenergieübertragungssystems 10b. Eine Aufnahmeeinheit 12b des Induktionsenergieübertragungssystems 10b ist als eine Unterlegeinheit 44b zur Aufstellung eines Gargeschirrs 42b ausgebildet. Die Aufnahmeeinheit 12b weist bis auf eine induktive Beheizung die Funktionalität der Aufnahmeeinheit 12a des vorherigen Ausführungsbeispiels auf. Die induktive Beheizung erfolgt vorliegend unmittelbar in einem Gargeschirrboden des Gargeschirrs 42b.

Figur 6 zeigt ein elektrisches Schaltbild eines weiteren alternativen Ausführungsbeispiels eines Induktionsenergieübertragungssystems 10c. Das Induktionsenergieübertragungssystem 10c des vorliegenden Ausführungsbeispiels ist weitgehend identisch zu dem Induktionsenergieübertragungssystem 10a des ersten Ausführungsbeispiels ausgebildet und unterscheidet sich lediglich hinsichtlich einer Spannungswandlereinheit 16c des Induktionsenergieübertragungssystems 10c. Die Spannungswandlereinheit 16c ist dazu vorgesehen, zumindest eine elektrische Wechselspannung in eine elektrische Gleichspannung einer ersten elektrischen Polarität und in zumindest eine weitere elektrische Gleichspannung mit einer zu der ersten elektrischen Polarität entgegengesetzten zweiten elektrischen Polarität zu wandeln.

Die Spannungswandlereinheit 16c umfasst eine Spannungskaskade 20c und eine weitere Spannungskaskade 220c. Die Spannungskaskade 20c umfasst eine erste Stufe 22c mit den Diodenelementen 54c, 56c und den Kondensatorelementen 50c, 52c; eine zweite Stufe 28c mit den Diodenelementen 68c, 70c und den Kondensatorelementen 64c, 66c und eine dritte Stufe 48c mit den Diodenelementen 76c, 78c und den Kondensatorelementen 72c, 74c. Der Aufbau und die Funktionsweise der Spannungskaskade 20c entspricht der oben beschriebenen Darstellung der Spannungskaskade 20a aus Fig.3. Die weitere Spannungskaskade 220c ist symmetrisch zu der Spannungskaskade 20c aufgebaut. Die weitere Spannungskaskade 220c umfasst eine weitere erste Stufe 222c mit den weiteren Diodenelementen 254c, 256c und den weiteren Kondensatorelementen 250c, 252c; eine weitere zweite Stufe 228c mit den weiteren Diodenelementen 268c, 270c und den weiteren Kondensatorelementen 264c, 266c und eine weitere dritte Stufe 248c mit den weiteren Diodenelementen 276c, 278c und den weiteren Kondensatorelementen 272c und 274c. Die Elemente der weiteren Spannungskaskade 220c sind zueinander zumindest im Wesentlichen gleich angeordnet wie die Elemente der Spannungskaskade 20c, wobei die jeweilige Durchlassrichtungen der Diodenelemente 254c, 256c, 268c, 270c, 276c, 278c der weiteren Spannungskaskade 220c gegenüber den jeweiligen Durchlassrichtungen der Diodenelemente 54c, 56c, 68c, 70c, 76c, 78c der Spannungskaskade 20c umgekehrt sind. Beispielsweise fließt durch das erste Diodenelement 54c in der ersten Spannungskaskade 20c während einer ersten Halbschwingung einer halben Periodendauer eines Wechselspannungsintervalls einer Wechselspannungsquelle 62c, welche über die Anschlusspunkte 58c und 60c mit den Spannungskaskaden 20c und 220c verbunden ist, ein Strom und lädt das erste Kondensatorelement 50c auf, während das weitere erste Diodenelement 254c der weiteren Spannungskaskade 220c während dieser ersten Halbschwingung einen Stromfluss in Richtung des weiteren ersten Kondensatorelements 250c sperrt. Folglich sind die elektrischen Vorgänge in der Spannungskaskade 20c und in der weiteren Spannungskaskade 220 jeweils um eine halbe Periodendauer zeitlich versetzt. Die weitere erste Stufe 222c der weiteren Spannungskaskade 220c kann über einen weiteren dritten Anschlusspunkt 208c, die weitere zweite Stufe 228c kann über einen weiteren vierten Anschlusspunkt 210c und die weitere dritte Stufe 248c kann über einen weiteren fünften Anschlusspunkt 212c mit einer Schalteinheit (nicht dargestellt) des Induktionsenergieübertragungssystems 10c verbunden werden. Je nach Schaltzustand, kann an den weiteren Anschlusspunkten 208c, 210c und 212c eine weitere durch die Spannungswandlereinheit 16d gewandelte elektrische Gleichspannung, mit einer zu der ersten elektrischen Polarität der durch die erste Spannungskaskade 20c gewandelten Gleichspannung entgegengesetzten zweiten elektrischen Polarität abgegriffen werden. Vorliegend entspricht diese zweite Polarität einer negativen elektrischen Polarität.

### Bezugszeichen

- 10: Induktionsenergieübertragungssystem
- 12: Aufnahmeeinheit
- 14: Aufnahmeinduktionselement
- 16: Spannungswandlereinheit
- 18: weitere Einheit
- 20: Spannungskaskade
- 22: erste Stufe
- 24: Steuereinheit
- 26: Spannungsregler
- 28: zweite Stufe
- 30: Schalteinheit
- 32: zweites Aufnahmeinduktionselement
- 34: Sekundärspule
- 36: Versorgungseinheit
- 38: Versorgungsinduktionselement
- 40: Gargerät
- 42: Gargeschirr
- 44: Unterlegeinheit
- 46: drittes Aufnahmeinduktionselement
- 48: dritte Stufe
- 50: erstes Kondensatorelement
- 52: zweites Kondensatorelement
- 54: erstes Diodenelement
- 56: zweites Diodenelement
- 58: erster Anschlusspunkt
- 60: zweiter Anschlusspunkt
- 62: Wechselspannungsquelle
- 64: drittes Kondensatorelement
- 66: viertes Kondensatorelement
- 68: drittes Diodenelement
- 70: viertes Diodenelement
- 72: fünftes Kondensatorelement
- 74: sechstes Kondensatorelement
- 76: fünftes Diodenelement
- 78: sechstes Diodenelement
- 80: Ordinatenachse
- 82: Abszissenachse
- 84: Ordinatenachse
- 86: Abszissenachse
- 88: Ordinatenachse
- 90: Abszissenachse
- 92: erste Spannungskurve
- 94: zweite Spannungskurve
- 96: dritte Spannungskurve
- 98: vierte Spannungskurve
- 100: fünfte Spannungskurve
- 102: Energieversorgungsspannungsintervall
- 104: Spannungsintervall
- 106: Bedienerschnittstelle
- 108: Eingabeeinheit
- 110: Gehäuseeinheit
- 112: Ausgabeeinheit
- 114: Bedienelektronik
- 116: weiteres Aufnahmeinduktionselement
- 118: weitere Sekundärspule
- 120: Aufnahmeraum
- 122: dritter Anschlusspunkt
- 124: vierter Anschlusspunkt
- 126: fünfter Anschlusspunkt
- 180: Ordinatenachse
- 182: Abszissenachse
- 184: Ordinatenachse
- 186: Abszissenachse
- 188: Ordinatenachse
- 190: Abszissenachse
- 192: weitere erste Spannungskurve
- 194: weitere zweite Spannungskurve
- 196: weitere dritte Spannungskurve
- 198: weitere vierte Spannungskurve
- 200: weitere fünfte Spannungskurve
- 202: weiteres Energieversorgungsspannungsintervall
- 204: weiteres Spannungsintervall
- 208: weiterer dritter Anschlusspunkt
- 210: weiterer vierter Anschlusspunkt
- 212: weiterer fünfter Anschlusspunkt
- 220: weitere Spannungskaskade
- 222: weitere erste Stufe
- 228: weitere zweite Stufe
- 248: weitere dritte Stufe
- 250: weiteres erstes Kondensatorelement
- 252: weiteres zweites Kondensatorelement
- 254: weiteres erstes Diodenelement
- 256: weiteres zweites Diodenelement
- 264: weiteres drittes Kondensatorelement
- 266: weiteres viertes Kondensatorelement
- 268: weiteres drittes Diodenelement
- 270: weiteres viertes Diodenelement
- 272: weiteres fünftes Kondensatorelement
- 274: weitere sechstes Kondensatorelement
- 276: weiteres fünftes Diodenelement
- 278: weiteres sechstes Diodenelement

## Patentansprüche

1. Induktionsenergieübertragungssystem (10a; 10b; 10c), insbesondere Induktionsgarsystem, mit zumindest einer Aufnahmeeinheit (12a), welche zumindest ein Aufnahmeinduktionselement (14a) aufweist, welches zu einem Empfang einer induktiv bereitgestellten Energie vorgesehen ist, wobei die Aufnahmeeinheit (12a) zumindest eine Steuereinheit (24a) mit zumindest einem Spannungsregler (26a) aufweist, welcher dazu vorgesehen ist, eine Versorgungsspannung für eine weitere Einheit (18a) einzustellen, und zumindest eine mit dem Aufnahmeinduktionselement (14a) verbundene Spannungswandlereinheit (16a; 16c) aufweist, die zu einer Wandlung einer elektrischen Spannung des Aufnahmeinduktionselements (14a) für eine Energieversorgung zumindest einer weiteren Einheit (18a) vorgesehen ist, wobei die Spannungswandlereinheit (16a; 16c) zumindest eine Spannungskaskade (20a; 20c, 220c) mit zumindest einer Stufe (22a; 22c; 222c) beinhaltet, **dadurch gekennzeichnet, dass** die Spannungskaskade (20a) mehrere Stufen (22a, 28a, 48a; 22c, 28c, 48c, 222c, 228c, 248c) zu einer Wandlung der elektrischen Spannung aufweist und die Steuereinheit (24a) eine Schalteinheit (30a) umfasst, welche in Abhängigkeit einer von der weiteren Einheit (18a) benötigten Versorgungsspannung eine geeignete Stufe (22a, 28a, 48a; 22c, 28c, 48c, 222c, 228c, 248c) der zumindest einen Spannungskaskade (20a; 20c, 220C) ansteuert.

2. Induktionsenergieübertragungssystem (10a; 10b; 10c) nach Anspruch 1, **dadurch gekennzeichnet, dass** die Spannungswandlereinheit (16a; 16c) dazu vorgesehen ist, zumindest eine elektrische Wechselspannung in zumindest eine elektrische Gleichspannung zu wandeln.

3. Induktionsenergieübertragungssystem (10a; 10b; 10c) nach Anspruch 2, **dadurch gekennzeichnet, dass** die Spannungswandlereinheit (16c) dazu vorgesehen ist, die elektrische Wechselspannung in zumindest eine weitere elektrische Gleichspannung mit zur Gleichspannung entgegengesetzter Polarität zu wandeln.

4. Induktionsenergieübertragungssystem (10a; 10b; 10c) nach einem der vorhergehenden Ansprüche, **dadurch gekennzeichnet, dass** die Spannungswandlereinheit (16a; 16c) zumindest eine Cockcroft-Walton-Schaltung umfasst.

5. Induktionsenergieübertragungssystem (10a; 10b; 10c) nach einem der vorhergehenden Ansprüche, **dadurch gekennzeichnet, dass** die Aufnahmeeinheit (12a) zumindest ein zweites Aufnahmeinduktionselement (32a) aufweist, welches mit dem ersten Aufnahmeinduktionselement (14a) Teil einer gemeinsamen Sekundärspule (34a) ist.

6. Induktionsenergieübertragungssystem (10a; 10b; 10c) nach einem der vorhergehenden Ansprüche, **gekennzeichnet durch** eine Versorgungseinheit (36a), welche zumindest ein Versorgungsinduktionselement (38a) aufweist, welches zur Bereitstellung eines magnetischen Wechselfelds für das Aufnahmeinduktionselement (14a) vorgesehen ist.

7. Induktionsenergieübertragungssystem (10a; 10b; 10c) nach Anspruch 6, **dadurch gekennzeichnet, dass** die Versorgungseinheit (36a) als ein Gargerät (40a) ausgebildet ist.

8. Induktionsenergieübertragungssystem (10a; 10b; 10c) nach einem der vorhergehenden Ansprüche, **dadurch gekennzeichnet, dass** die Aufnahmeeinheit (12a) als ein Gargeschirr (42a) ausgebildet ist.

9. Induktionsenergieübertragungssystem (10a; 10b; 10c) nach einem der Ansprüche 1 bis 7, **dadurch gekennzeichnet, dass** die Aufnahmeeinheit (12b) als eine Unterlegeinheit (44b) zur Aufstellung eines Gargeschirrs (42b) ausgebildet ist.

10. Gargeschirr (42a) oder Unterlegeinheit (44b) zur Aufstellung eines Gargeschirrs (42b), mit einem Induktionsenergieübertragungssystem (10a; 10b; 10c) nach einem der Ansprüche 1 bis 5.

11. Verfahren zum Betrieb eines Induktionsenergieübertragungssystems (10a; 10b; 10c), insbesondere eines Induktionsgarsystems, insbesondere nach einem der Ansprüche 1 bis 10, mit zumindest einer Steuereinheit (24a), die zumindest einen Spannungsregler (26a) aufweist, welcher eine Versorgungsspannung für eine weitere Einheit (18a) einstellt, mit zumindest einem Aufnahmeinduktionselement (14a), welches in einem Betriebszustand induktiv bereitgestellte Energie empfängt, wobei eine elektrische Spannung des Aufnahmeinduktionselements (14a) für eine Energieversorgung zumindest einer weiteren Einheit (18a) gewandelt wird und wobei in einer Spannungswandlereinheit (16a; 16c) zumindest eine Spannungskaskade (20a; 20c, 220c) mit zumindest einer Stufe (22a; 22c; 222c) angeordnet ist, **dadurch gekennzeichnet, dass** die elektrische Spannung mittels mehrerer Stufen (22a, 28a, 48a; 22c, 28c, 48c, 222c, 228c, 248c) der Spannungskaskade (20a) gewandelt wird und die Steuereinheit (24a) eine Schalteinheit (30a) umfasst, durch die in Abhängigkeit einer von der weiteren Einheit (18a) benötigten Versorgungsspannung eine geeignete Stufe (22a, 28a, 48a; 22c, 28c, 48c, 222c, 228c, 248c) der zumindest einen Spannungskaskade (20a; 20c, 220C) angesteuert wird.

## Claims

1. Induction energy transmission system (10a; 10b; 10c), in particular an induction cooking system, comprising at least one receiving unit (12a), which has at least one receiving induction element (14a) for receiving an inductively provided energy, wherein the receiving unit (12a) has at least one control unit (24a) with at least one voltage regulator (26a) which is provided to adjust a supply voltage for an additional unit (18a), and the receiving unit (12a) has at least one voltage converter unit (16a; 16c) connected to the receiving induction element (14a), which voltage converter unit is provided for converting a voltage of the receiving induction element (14a) in order to supply energy to at least one additional unit (18a), wherein the voltage converter unit (16a; 16c) contains at least one voltage cascade (20a; 20c; 220c) with at least one stage (22a; 22c; 222c), **characterised in that** the voltage cascade (20a) has a plurality of stages (22a, 28a, 48a; 22c, 28c, 48c, 222c, 228c, 248c) for a conversion of the electrical voltage and the control unit (24a) comprises a switching unit (30a) which activates a suitable stage (22a, 28a, 48a; 22c, 28c, 48c, 222c, 228c, 248c) of the at least one voltage cascade (20a; 20c, 220c) as a function of a supply voltage required by the additional unit (18a).

2. Induction energy transmission system (10a; 10b; 10c) according to claim 1, **characterised in that** the voltage converter unit (16a; 16c) is provided to convert at least one electrical alternating voltage into at least one electrical direct voltage.

3. Induction energy transmission system (10a; 10b; 10c) according to claim 2, **characterised in that** the voltage converter unit (16c) is provided to convert the electrical alternating voltage into at least one further electrical direct voltage with a polarity opposing the direct voltage.

4. Induction energy transmission system (10a; 10b; 10c) according to one of the preceding claims, **characterised in that** the voltage converter unit (16a; 16c) comprises at least one Cockcroft-Walton circuit.

5. Induction energy transmission system (10a; 10b; 10c) according to one of the preceding claims, **characterised in that** the receiving unit (12a) has at least one second receiving induction element (32a) which is part of a common secondary coil (34a) with the first receiving induction element (14a).

6. Induction energy transmission system (10a; 10b; 10c) according to one of the preceding claims, **characterised by** a supply unit (36a) which has at least one supply induction element (38a), which is provided for providing a magnetic alternating field for the receiving induction element (14a).

7. Induction energy transmission system (10a; 10b; 10c) according to claim 6, **characterised in that** the supply unit (36a) is configured as a cooking appliance (40a).

8. Induction energy transmission system (10a; 10b; 10c) according to one of the preceding claims, **characterised in that** the receiving unit (12a) is configured as an item of cookware (42a).

9. Induction energy transmission system (10a; 10b; 10c) according to one of claims 1 to 7, **characterised in that** the receiving unit (12b) is configured as a support unit (44b) for positioning an item of cookware (42b).

10. Cookware (42a) or support unit (44b) for positioning an item of cookware (42b), with an induction energy transmission system (10a; 10b; 10c) according to one of claims 1 to 5.

11. Method for operating an induction energy transmission system (10a; 10b; 10c), in particular an induction cooking system, in particular according to one of claims 1 to 10, with at least one control unit (24a), which has at least one voltage regulator (26a) which adjusts a supply voltage for an additional unit (18a), with at least one receiving induction element (14a) which in an operating state receives inductively provided energy, wherein an electrical voltage of the receiving induction element (14a) is converted for supplying energy to at least one additional unit (18a) and wherein at least one voltage cascade (20a; 20c; 220c) with at least one stage (22a; 22c; 222c) is arranged in a voltage converter unit (16a; 16c), **characterised in that** the electrical voltage is converted by means of a plurality of stages (22a, 28a, 48a; 22c, 28c, 48c, 222c, 228c, 248c) of the voltage cascade (20a) and the control unit (24a) comprises a switching unit (30a), by way of which a suitable stage (22a, 28a, 48a; 22c, 28c, 48c, 222c, 228c, 248c) of the at least one voltage cascade (20a; 20c, 220c) is activated as a function of a supply voltage required by the additional unit (18a).

## Revendications

1. Système de transmission d'énergie par induction (10a, 10b, 10c), en particulier système de cuisson par induction, comprenant au moins une unité de réception (12a), qui comprend au moins un élément d'induction de réception (14a), qui est conçu pour recevoir de l'énergie fournie par induction,
dans lequel l'unité de réception (12a) comprend au moins une unité de commande (24a) comportant au moins un régulateur de tension (26a) qui est conçu pour régler une tension d'alimentation pour une autre unité (18a), et comprend au moins une unité de convertisseur de tension (16a, 16c) reliée à l'élément d'induction de réception (14a), qui est conçue pour transformer une tension électrique de l'élément d'induction de réception (14a) pour une alimentation d'énergie d'au moins une autre unité (18a),
dans lequel l'unité de convertisseur de tension (16a, 16c) comprend au moins une cascade de tension (20a, 20c, 220c) comportant au moins un étage (22a, 22c, 222c), **caractérisé en ce que** la cascade de tension (20a) comprend plusieurs étages (22a, 28a, 48a, 22c, 28c, 48c, 222c, 228c, 248c) pour une transformation de la tension électrique et l'unité de commande (24a) comprend une unité de commutation (30a), qui excite un étage approprié (22a, 28a, 48a, 22c, 28c, 48c, 222c, 228c, 248c) de l'au moins une cascade de tension (20a, 20c, 220c) en fonction d'une tension d'alimentation nécessitée par l'autre unité (18a).

2. Système de transmission d'énergie par induction (10a, 10b, 10c) selon la revendication 1, **caractérisé en ce que** l'unité de convertisseur de tension (16a, 16c) est conçue pour transformer au moins une tension électrique alternative en au moins une tension électrique continue.

3. Système de transmission d'énergie par induction (10a, 10b, 10c) selon la revendication 2, **caractérisé en ce que** l'unité de convertisseur de tension (16c) est conçue pour transformer la tension électrique alternative en au moins une autre tension électrique continue ayant une polarité opposée à la tension continue.

4. Système de transmission d'énergie par induction (10a, 10b, 10c) selon l'une des revendications précédentes, **caractérisé en ce que** l'unité de convertisseur de tension (16a, 16c) comprend au moins un circuit de Cockcroft-Walton.

5. Système de transmission d'énergie par induction (10a, 10b, 10c) selon l'une des revendications précédentes, **caractérisé en ce que** l'unité de réception (12a) comprend au moins un deuxième élément d'induction de réception (32a), qui fait partie d'une bobine secondaire (34a) commune avec le premier élément d'induction de réception (14a).

6. Système de transmission d'énergie par induction (10a, 10b, 10c) selon l'une des revendications précédentes, **caractérisé par** une unité d'alimentation (36a), qui comprend au moins un élément d'induction d'alimentation (38a) qui est conçu pour produire un champ alternatif magnétique pour l'élément d'induction de réception (14a).

7. Système de transmission d'énergie par induction (10a, 10b, 10c) selon la revendication 6, **caractérisé en ce que** l'unité d'alimentation (36a) est conçue sous forme d'un appareil de cuisson (40a).

8. Système de transmission d'énergie par induction (10a, 10b, 10c) selon l'une des revendications précédentes, **caractérisé en ce que** l'unité de réception (12a) est conçue sous forme d'un ustensile de cuisson (42a).

9. Système de transmission d'énergie par induction (10a, 10b, 10c) selon l'une des revendications 1 à 7, **caractérisé en ce que** l'unité de réception (12b) est conçue sous forme d'une unité de support (44b) pour poser un ustensile de cuisson (42b).

10. Ustensile de cuisson (42a) ou unité de support (44b) pour poser un ustensile de cuisson (42b), comprenant un système de transmission d'énergie par induction (10a, 10b, 10c) selon l'une des revendications 1 à 5.

11. Procédé de fonctionnement d'un système de transmission d'énergie par induction (10a, 10b, 10c), en particulier d'un système de cuisson par induction, en particulier selon l'une des revendications 1 à 10, avec au moins une unité de commande (24a), qui comprend au moins un régulateur de tension (26a), qui règle une tension d'alimentation pour une autre unité (18a), et avec au moins un élément d'induction de réception (14a), qui reçoit de l'énergie fournie par induction dans un état de fonctionnement,
dans lequel une tension électrique de l'élément d'induction de réception (14a) est transformée pour une alimentation d'énergie d'au moins une autre unité (18a), et dans lequel au moins une cascade de tension (20a, 20c, 220c) comportant au moins un étage (22a, 22c, 222c) est disposée dans une unité de convertisseur de tension (16a, 16c),
**caractérisé en ce que** la tension électrique est transformée au moyen de plusieurs étages (22a, 28a, 48a, 22c, 28c, 48c, 222c, 228c, 248c) de la cascade de tension (20a) et l'unité de commande (24a) comprend une unité de commutation (30a), par laquelle un étage approprié (22a, 28a, 48a, 22c, 28c, 48c, 222c, 228c, 248c) de l'au moins une cascade de tension (20a, 20c, 220c) est excité en fonction d'une tension d'alimentation nécessitée par l'autre unité (18a).
